# EUROPÄISCHE PATENTSCHRIFT

(11) **EP 2 651 215 B1**
(45) Veröffentlichungstag und Bekanntmachung des Hinweises auf die Patenterteilung: **20.05.2015**
(21) Anmeldenummer: 11797311.5
(22) Anmeldetag: 12.12.2011
(51) Int. Cl.: A01N 25/04, A01N 25/26, A01N 25/28, A01N 53/00, A01N 47/02, A01N 47/22, A01P 7/00

(54) **INSEKTIZID-WACHS-PARTIKEL ENTHALTENDE ZUSAMMENSETZUNG**
COMPOSITION CONTAINING INSECTICIDE-WAX PARTICLES
COMPOSITIONS COMPRENANT DES PARTICULES DE LA CIRE ET D'UN INSECTICIDE

(30) Priorität: 17.12.2010 EP 10195657; 14.02.2011 US 201161442445 P; 14.04.2011 EP 11162403
(43) Veröffentlichungstag der Anmeldung: 23.10.2013
(73) Patentinhaber: Bayer Intellectual Property GmbH, 40789 Monheim (DE)
(72) Erfinder: GUTSMANN, Volker, 40764 Langenfeld (DE); BÖCKER, Thomas, 42799 Leichlingen (DE); NENTWIG, Günther, 51381 Leverkusen (DE); SONNECK, Rainer, 51375 Leverkusen (DE); HACK, Beate, 52066 Aachen (DE); DUFF, Daniel Gordon, 51373 Leverkusen (DE)
(74) Vertreter: BIP Patents
(86) Internationale Anmeldenummer: PCT/EP2011/072484
(87) Internationale Veröffentlichungsnummer: WO 2012/080188

(56) Entgegenhaltungen:
- WO-A1-00/49107
- WO-A1-2011/148144
- WO-A2-2010/031508
- DE-A1-102006 019 818
- DATABASE WPI Week 199351 Thomson Scientific, London, GB; AN 1993-408399 XP002184429, -& JP 5 305226 A (TAKEDA CHEM IND LTD) 19. November 1993 (1993-11-19)

## Beschreibung

Die vorliegende Erfindung betrifft die Verwendung von insektiziden Zusammensetzungen zur lang anhaltenden Bekämpfung tierischer Schädlinge (Arthropoden) auf verschiedenen Oberflächen. Weiterhin betrifft die vorliegende Erfindung die Verwendung von Wirkstoff-Wachs-Partikel, in denen mindestens ein insektizider Wirkstoff in Wachs dispergiert vorliegt.

Die Bekämpfung von Arthropoden innerhalb und außerhalb von Gebäuden und Häusern ist aus verschiedenen Gründen notwendig. In Ländern, in denen Krankheiten von Arthropoden wie Insekten oder Spinnentieren auf Tiere und Menschen übertragen werden, z.B. Malaria, besteht ein starker Bedarf, die Bewohner wirksam und langfristig zu schützen. Darüber hinaus soll aus hygienischen und bautechnischen Gründen verhindert werden, dass tierische Schädlinge in Gebäude eindringen, sich in Gebäuden ausbreiten und aufhalten sowie Holz oder andere Materialien befallen. Aus diesem Grund wurde bereits eine Vielzahl von Bekämpfungsmitteln und -verfahren entwickelt. Die häufigste Bekämpfungsmethode ist das Ausbringen von insektiziden Wirkstoffen in wässrigen Spritz- oder Sprühlösungen. Unabhängig von dem verwendeten Wirkstoff ist die Wirksamkeit des Sprühbelags dabei auch stark abhängig von den chemischphysikalischen Eigenschaften der besprühten Oberfläche. Die Wirkungsdauer des Sprühbelags wird besonders auf porösen und insbesondere alkalischen, porösen Oberflächen (auch als aggressive Oberflächen bezeichnet) wie Beton, Putz, Mauerstein, Holz (behandelt und unbehandelt), Keramik, Stroh bzw. Reet, kreidehaltigen, kalkhaltigen, gipshaltigen, zementhaltigen und lehmhaltigen Oberflächen stark beeinträchtigt und verringert. Dies führt z.B. bei der Bekämpfung von Malariamücken innerhalb von Gebäuden zu kurzen Dauerwirkungen von maximal 6 Monaten.

Bei der Schädlingsbekämpfung im Außenbereich des Hauses werden die Hauswände, der Erdboden, Pflanzen und Rasenflächen behandelt. Hier führt neben den Oberflächeneigenschaften (Porosität, pH-Wert) zusätzlich der Temperatur-, UV- und Regeneinfluss dazu, dass die eingesetzten Wirkstoffe ihre Wirksamkeit schnell verlieren.

Üblicherweise werden systemische agrochemische Wirkstoffe als Emulsionskonzentrat (EC), Soluble Liquid (SL) und / oder ölbasierendes Suspensions-konzentrat (OD) formuliert. In einer EC- und SL-Formulierung liegt der Wirkstoff in gelöster Form vor, bei einer OD-Formulierung als Feststoff. Auch ein Suspensions-konzentrat (SC) oder wassedispergierbares Granulat (WG) ist in der Regel technisch möglich. Im weitere werden nur Suspensionskonzentrate beschrieben, wobei auch andere Formuliertypen, bei denen der Wirkstoff in einer im Wasser dispergierbaren Form vorliegt, gemeint sind.

Üblicherweise beträgt die Wirkstoffartikelgröße in Suspensionskonzentraten, die mikronisierte Wirkstoffkristalle enthalten, welche mit Hilfsstoffen formuliert werden, ca. 1 bis 3 µm. Es war bekannt, dass Wirkstoffpartikel mit großer Partikelgröße eine verbesserte biologische Wirkung erzielen können. Das Bereitstellen größerer Wirkstoffpartikel hat aber wirtschaftliche Nachteile. Statt größerer Wirkstoffpartikel können auch Partikel eingesetzt werden, die aus mit Wirkstoff beschichteten inerten Trägerpartikeln bestehen. Die Wirkstoffe werden dabei i.a. durch Aufsprühen von wirkstoffhaltigen Lösungen auf die Trägerpartikel erhalten. Die Herstellung derartiger Wirkstoffformen ist aber technisch aufwendig und teuer.

Durch Spüherstarrung mikronisierte Wachse werden schon seit langem vielfältig eingesetzt, z.B. in Polituren.

Wachse werden zudem häufig als Beschichtungen eingesetzt, um die Oberflächen von Granulaten zu verändern, unter anderem auch im Bereich des Pflanzenschutzes und der Schädlingsbekämpfung.

WO 00/49107 offenbart Mischungen von Pflanzenbehandlungsmitteln mit einem oder mehreren Wachsen. Die Verwendung dieser Gemische als Oberflächenbehandlungsmittel ist im Dokument nicht erwähnt. Durch das Mischen mit Wachs soll die Flüchtigkeit von Wirkstoffen reduziert, die Anwendertoxizität reduziert, die phytotoxischen Effekte der Wirkstoffe reduziert, die Wirkungssicherheit erhöht, die Regenbeständigkeit des Formulierungsfilms erhöht und eine langsame Freisetzung des Wirkstoffs erreicht werden. Es ist daher nach dieser Lehre möglich, entweder die Wirkstoffmengen zu reduzieren oder die Spritzintervalle zu verlängern. Die Mischungen werden hergestellt durch direktes Mischen von Wirkstoff und Wachs, durch Verschmelzen in einem Mischer, oder Dispergieren des Wirkstoffs in einer Wachsdispersion unter Zusatz von Hilfsstoffen, wobei sich Wachs fein verteilt auf dem Wirkstoff abscheidet. Eine bevorzugte Alternative für die Herstellung der beschriebenen Mischungen besteht darin, ein fertiges käufliches Pflanzenbehandlungs-Emulsionskonzentrat mit Wachs zu behandeln oder dem Emulsionskonzentrat Wachs, bevorzugt als Wachsdispersion, zuzusetzen.

WO 95/34200 beschreibt in verschiedene Formen gebrachte Zusammensetzungen aus mehreren verschiedenen Wachsen unterschiedlicher Wasserlöslichkeit und Pflanzenschutzwirkstoffen. Diese werden durch unterschiedliche Verfahren wie Zusammenschmelzen, Sprüherstarrung oder Extrusion hergestellt. Die Gemische liegen u.a. auch in Form von kugelförmigen oder halbkugeligen Körnern, deren Partikelgröße nicht offenbart ist, vor und werden grundsätzlich in fester Form, nicht aber als Dispersion oder Supension, eingesetzt. Durch das Mischen mit Wachs soll die Freisetzung des Wirkstoffs verzögert werden.

WO 97/35476 beschreibt die Einarbeitung von aromatischen Verbindungen wie z.B. Zimtaldehyd oder Coniferylaldehyd in Wachs in Form von Mikrokapseln durch Einkapseln in einer wässerigen Emulsion und ihre Verwendung in verschiedenen Formulierungen zur Kontrolle von Insekten-Schädlingen oder als Insektenfallen.

WO 1995/028835 offenbart ein Verfahren zur Herstellung einer Pestizid-haltigen Wachsmatrix durch Extrusion, bei dem mehrere Wachse mit verschiedenen Eigenschaften und ein Pestizid mit einem Multischencken-Extruder behandelt werden. Durch die unterschiedlichen Eigenschaften der eingesetzten Wachse, die homogen vermischt werden, kann das Pestizid in kontrollierter Weise freigesetzt werden. Hier ist das Ziel des Verfahrens die verlangsamte Freisetzung des Wirkstoffs.

DE-A 1207144 offenbart feste Begasungsmittel, enthaltend Dimethylchlorvinyl-phosphat als Wirkstoff, das in einem Träger, nämlich Montanwachs, hydriertem Baumwollsamenöl oder Dibutylphathalat, dispergiert vorliegt. Die erhaltenen festen Gemische werden in Form von Zylindern, Bändern o.a. bereitgestellt, so dass der Wirkstoff nach Verflüchtigung aus der Oberfläche der Zubereitung mit der Feuchtigkeit der Luft in Berührung kommt. Es soll gemäß dieser Lehre eine langanhaltende und möglichst gleichmäßige Wirkung des flüchtigen Wirkstoffs erreicht werden.

Ähnliche feste Begasungsmittel sind auch aus DE-A 2023367 bekannt.

US 4,882,167 beschreibt controlled-release-Zusammensetzungen, enthaltend ein hydrophobes Kohlenhydrat-Polymer, ein Wachs und ein biologisch aktives Mittel, u.a. auch ein Pestizid, die durch direkte Trocken-Kompression der Bestandteile zu einer Tablette oder Implantaten erhalten werden. Es soll eine gleichmäßige kontrollierte Freisetzung des Wirkstoffs erzielt werden.

US 6,001,346 offenbart feste Formulierungen, umfassend spühbare oder feste biologisch abbaubare Wachse als Träger für Insekten-Pheromone. Die Zusammensetzung kann auch Insektizide als sekundäre bioaktive Mittel enthalten. Die Zusammensetzung wird durch Zusammenschmelzen der Komponenten und Formen zu Platten oder Granulaten, oder direktes Emulgieren in Wasser hergestellt. Die Zusammensetzung zeigt eine kontrollierte und gleichmäßige Freisetzung des Pheromons.

US 2008/0003197 offenbart ähnliche Pheromon-Zusammensetzungen, auch in Form von wässerigen Emulsionen bzw. Dispersionen. Diese können als sekundären bioaktiven Wirkstoff auch ein Insektizid umfassen.

WO 03/045877 beschreibt Mikrogranulate, die eine Kombination von Düngemittel und Pflanzenschutzmittel, z.B. ein Pestizid, umfassen. Sie enthalten ein Co-Adjuvans, das u.a. ein Wachs sein kann, in einer Menge von bis zu 1 Gew.%. Die Partikelgröße des Mikrogranulats beträgt 0,1 bis 2 mm (100 bis 2000 µm).

EP-A 0 021 477 offenbart Zusammensetzungen, umfassend ein festes Öl bzw. Wachs und ein systemisches Pestizid, üblicherweise in Form von Pellets oder Granulat, wobei das Pestizid in dem Öl/Wachs in Einschlüssen dispergiert vorliegt und der Durchmesser der Einschlüsse 10⁻⁸ bis 10⁻⁵ m (0,0001 bis 0,1 µm) beträgt. Die Wachs-Pestizid-Partikel werden durch Zugabe (unter Rühren) des Pestizids zu einer flüssigen Mischung aus Dispergiermittel und Wachs gegeben, emulgiert, und dann in Tropfen aufgeteilt, die dann in einer Aufnahmezone erstarren (Sprüherstarrung).

EP-A 0 721 734 (WO 95/09532) beschreibt durch eine durch Schmelzen hergestellte Zusammensetzung mit verzögerter Freisetzung aus einer hydrophoben Substanz mit einem Schmelzpunkt von mehr als 50 °C und einer ölabsorbierenden Substanz sowie einem Pestzid. Generell wird die Zusammesetzung durch Extrusion hergestellt, wobei Granulate mit einer Partikelgröße von 0,8 bis 2 mm (800 bis 2000 µm) Größe erhalten werden.

WO 2010/031508 der Anmelderin offenbart insektizide Begasungsmittel, die unter Verwendung wässeriger Dispersionen hergestellt werden. Diese Dispersionen enthalten Wachspartikel, in die ein Insektizid durch Schmelzen und Sprüherstarrung oder Heissemulgierung eingearbeitet ist. Die Partikelgröße der Insektizid-Wachs-Partikel beträgt 0,01 bis 100 µm, bevorzugt 0,1 bis 30 µm. Diese wässerigen Dispersionen enthalten bevorzugt einen Verdampfungshemmer und werden zu ausschließlich brennbaren Begasungsmitteln weiterverarbeitet, sogenannten Coils. Durch die Einarbeitung des Insektizids in Form von Wachs-Insektizid-Partikeln soll die Lagerstabilität der Coils verbessert werden. Es sind eine Reihe von Wirkstoffen in Aufzählungen als geeignet erwähnt, in den Beispielen wird aber lediglich Transfluthrin explizit offenbart. Der Einsatz der wässerigen Dispersionen selbst als insektizide Formulierung wird ebenfalls nicht offenbart.

WO 2006/117158 bzw. DE102006019818A1 offenbart die Verwendung von wässrigen Wachdispersionen zur Imprägnierung von Lignocellulose-Materialien, bevorzugt Holz. Die Wachspartikel haben einen Durchmesser von weniger als 500 nm (0,5 µm). Die Dispersion oder die Wachspartikel können auch Effekt- oder Wirkstoffe enthalten, wie z.B. Farbmittel, UV-Absorber, Antioxidantien, Stabilisatoren sowie Wirkstoffe zum Schutz von Holz oder Liognoscellulosematerial vor Befall durch Schadorganismen, insbesondere holzzerstörende Insekten. Als derartige Wirkstoffe werden auch eine Reihe von Insektiziden offenbart. Die Beispiele enthalten keine Beschreibung von Wachspartikeln, die einen insektiziden Wirkstoff enthalten. Es wird keine Herstellungsmethode für insektizidhaltige Wachspartikel anegegeben. Die in den Beispielen beschriebenen Wachsdispersionen werden jeweils durch Dispergieren bzw. Emulgieren von Wachs in Wasser bei 95 °C hergestellt.

JP-A 7242502 offenbart eine agrochemische Zusammensetzung mit verzögerter Freisetzung des Wirkstoffs, bei der der Wirkstoff gemeinsam mit einem Wachs und einem wasserunöslichen Mineralöl tablettiert oder geschmolzen wird. Anschließend wird das Produkt auf eine Partikelgröße von 0,1 bis 0,5 mm (100 bis 500 µm) gebracht und direkt verwendet.

JP-A 5305226 beschreibt ein eine agrochemische Zusammensetzung mit verzögerter Freisetzung des Wirkstoffs Nitenpyram, bei der Carnauba-Wachs bei 90°C geschmolzen und mit Nitenpyram versetzt wird. Ein Netzmittel wird hinzugefügt, um Nitenpyram homogen im Wachs zu verteilen. Die erhaltene Zusammensetzung wird in einem Sprühtrockner abgekühlt und auf 50-200 µm granuliert. Im Gegensatz zur vorliegenden Erfindung liegt bei dieser Offenlegungsschrift ein konträre Zielsetzung vor (Verzögerte Freisetzung im Gegensatz zur vorliegenden Erfindung, bei der eine schnelle Bioverfügbarkeit im Vordergrund steht). Durch das notwendige Netzmittel bei der JP-A 5305226 wird die für die vorliegende erfindungsgemäße Zusammensetzung charakteristische Kristallbildung der Wirkstoffe an der Oberfläche der Wachspartikel verhindert. Die Wachsartikelgröße der vorliegenden Zusammensetzung ist mit 1 bis 40 µm kleiner als diejenige der JP-A 5305226.

JP-A 2000351705 beschreibt ein Gemisch von Montanesterwachs und Montanwachs, einem anorganischen Träger wie z.B. Calciumcarbonat und einem agrochemischen Wirkstoff in Form eines Granulats.

WO2011/148144 A1 ist unter Artikel 54(3) EPÜ zur Beurteilung der Neuheit der vorliegenen Erfindung relevant und offenbart die Verwendung von insektizidhaltigen Wachspartikeln. WO2011/148144 A1 beschreibt nicht explizit die in der vorliegenden Anmeldung beanspruchte Verwendung.

Es besteht andauernder Bedarf, die Wirksamkeit der Produkte unter den vorstehend genannten schwierigen Bedingungen zu verbessern. Durch einen länger anhaltenden Schutz kann die Exposition des Anwenders, der Bewohner, der Haustiere und der Umwelt minimiert werden, weil weniger häufig Wirkstoff ausgebracht werden muss.

Die der vorliegenden Erfindung zugrunde liegende Aufgabe war daher die Bereitstellung bzw. Verwendung neuer, verbesserter insektizider Zusammensetzungen, die lang anhaltenden Schutz vor Insekten bieten, wenn sie auf Oberflächen appliziert werden. Sie sollen sich insbesondere für poröse und/oder alkalische Oberflächen eignen und gegenüber Umwelteinflüssen wie hohen/tiefen/wechselnden Temperaturen, UV-Strahlung und Regen resistent sein. Zudem bestand die Aufgabe der Erfindung darin, insektizide Zusammensetzungen bereitzustellen, die mit einer geringeren Aufwandmenge eine schnelle Bioverfügbarkeit und eine hervorragende langanhaltende Wirksamkeit gewährleisten. Des weiteren sollten die Zusammensetzungen eine gute Stabilität auf aggressiven Unterlagen zeigen.

Diese Aufgabe wird durch die Verwendung der erfindungsgemäßen insektiziden Zusammensetzungen bzw. aus ihnen hergestellte Spritzbrühen, die generell eine Reihe vorteilhafter Eigenschaften aufweisen. So sind die erfindungsgemäß verwendeten Zusammensetzungen lösungsmittelfrei. Sie sind außerdem einfach in der Handhabung und Herstellung. Erfindungsgemäß einsetzbare Spritzbrühen können durch Verdünnen eines Konzentrats in Wasser hergestellt werden oder durch Mischen verschiedener Vorlösungen direkt vor dem Sprühen (Tank-Mix-Anwendung). Erfindungsgemäß verwendete Zusammensetzungen können auch Fertigformulierungen (RTU = ready-to-use) sein. Ein weiterer Vorteil zeigt sich in der schnellen Bioverfügbarkeit der erfindungsgemäß verwendeten insektiziden Zusammensetzung.

Die erfindungsgemäß verwendete insektizide Zusammensetzung enthält
- mindestens einen insektiziden Wirkstoff,
- Wachs mit einem Schmelzpunkt von 50 bis 160 °C bei Normalbedingungen,
- Wasser und
- übliche Zusatzstoffe und/oder Hilfsstoffe,
dadurch gekennzeichnet, dass
der/die insektizide(n) Wirkstoff(e) im Wachs dispergiert ist/sind und das insektizidhaltige Wachs in der Zusammensetzung in Form von Partikeln vorliegt, wobei die Partikel eine Partikelgröße (d50, bestimmt nach Dispergierung in der Wasserphase durch Laserbeugung) von 5 bis 40 µm aufweisen, und Kristalle des/der Wirkstoffs(e) an der Oberfläche der Partikel vorhanden sind (bei Betrachtung mit einem Mikroskop erkennbar). Diese insektizide Zusammensetzung wird zur Befreiung von Oberflächen von Schädlingsbefall und/oder zum Schutz von Oberflächen vor Schädlingsbefall, wobei die Schädlinge Schaben oder Ameisen sind, verwendet.

Es wurde überraschend gefunden, dass die erfindungsgemäß verwendeten Zusammensetzungen nach dem Aufbringen auf eine Oberfläche, ggf. nach Verdünnen mit Wasser, eine schnelle Bioverfügbarkeit und eine verbesserte biologische Langzeitwirkung im Vergleich zum Stand der Technik aufweisen. Dies gilt insbesondere bei der Behandlung von porösen und insbesondere alkalischen, porösen Oberflächen wie Beton, Putz, Mauerstein, Holz (behandelt und unbehandelt), Keramik, Stroh bzw. Reet, kreidehaltigen, kalkhaltigen, gipshaltigen, zementhaltigen und lehmhaltigen Oberflächen. Dabei bleibt die Wirkung bei Anwendung auf nicht-porösen Oberflächen im Wesentlichen unbeeinflusst.

Weiterhin wurde überraschend gefunden, dass die Haltbarkeit der durch Anwendung der erfindungsgemäßen wässrigen Suspensionskonzentrate erhaltenen Sprühbeläge auch unter dem Einfluss von hohen/tiefen/wechselnden Temperaturen, Regen und UV-Bestrahlung deutlich besser ist als die von vorbekannten Beschichtungen.

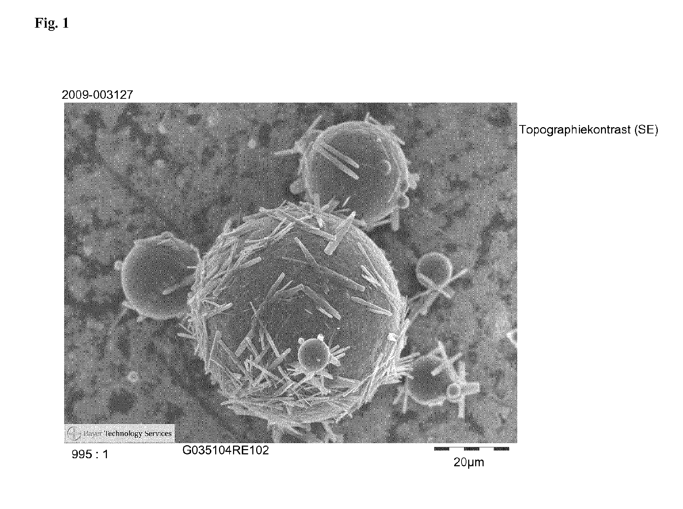

Figur 1 zeigt eine Mikroskop-Aufnahme (Rasterelektronenmikroskop ESEM Quanta 400 der Fa. FEI Company Deutschland GmbH) der Oberfläche von Wirkstoff-Wachs-Partikeln verwendet gemäß der Erfindung. Der Wirkstoff ist Deltamethrin. Es sind deutlich die Wirkstoff-Kristalle an der Oberfläche der Partikel zu erkennen.

Die in dieser Beschreibung mit ihrem ,,common name" genannten Wirkstoffe sind beispielsweise aus "The Pesticide Manual" 14th Ed., British Crop Protection Council 2006, und der Webseite http://www.alanwood.net/pesticides bekannt.

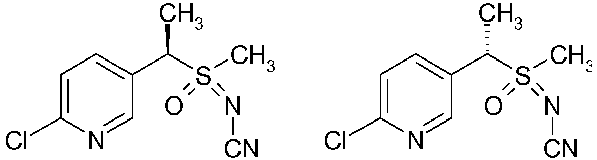

Die erfindungsgemäß verwendeten Zusammensetzungen enthalten mindestens ein Insektizid, ausgewählt aus Deltamethrin, Beta-Cyfluthrin, Cyfluthrin, Lambda-Cyhalothrin, Bendiocarb, Natürliches Pyrethrum und Fipronil.

Ganz besonders bevorzugt wird erfindungsgemäß Deltamethrin als eines der in der Zusammensetzung enthaltenen Insektizide verwendet.

WO 2010/031508 der Anmelderin offenbart insektizide Begasungsmittel und beschreibt in Anspruch 7 und den Beispielen eine wässrige Dispersion, enthaltend Wachspartikel, Insektizid und Verdampfungshemmer mit einer Wachspartikelteilchengröße von 0,01 bis 100 µm Diese wässrige Dispersion wird verwendet zur Herststellung des Begasungsmittels und führt zu einer Erhöhung der Lagerstabilität der Begasungsmittel. Die vorliegende insektizide Zusammensetzung unterscheidet sich von der wässrigen Dispersion vorzugsweise dadurch, dass kein Verdampfungshemmer (so wie in der WO2010/031508 definiert) vorhanden ist. In einem weiteren bevorzugten Gegenstand der vorliegenden Erfindung wird die erfindungsgemäße insektizide Zusammensetzung nicht für die Herstellung von insektiziden Begasungsmittel eingesetzt. Im Gegensatz zu den in der WO2010/031508 konkret mit Beispielen belegten wässrigen Dispersionen ist der erfindungsgemäß eingesetzte insektizide Wirkstoff vorzugsweise nicht Transfluthrin.

Bevorzugt wird die erfindungsgemäße Zusammensetzungen mit einem einzigen insektiziden Wirkstoff, insbesondere mit Deltamethrin, eingesetzt.

Als inerter Träger werden erfindungsgemäß übliche inerte Träger mit einem Schmelzpunkt zwischen 50 und 160 °C, bevorzugt zwischen 60 und 140 °C und besonders bevorzugt zwischen 70 und 120 °C unter Normalbedingungen eingesetzt. Diese werden in dieser Beschreibung als Wachs bezeichnet.

Bevorzugt kommen als Wachs pflanzliche Wachse wie z.B. Baumwollwachs, Carnaubawachs, Candellilawachs, Japanwachs, Zuckerrohrwachs; tierische Wachse wie z.B. Bienenwachs, Wollwachs, Schellackwachs; Mineralwachse wie z.B. Ceresin, Ozokerit, Montanwachs in Frage. Zudem können chemisch modfizierte Wachse erfindungsgemäß eingesetzt werden wie z.B. hydrierte Jojobawachse, Montanesterwachs und vollsynthetische Wachse wie Polyalkylenwachse, Polyethylenglykolwachse, Amidwachse, Fischer-Tropsch-Paraffinwachse und Fluorcarbonwachse.

Weitere geeignete Wachse sind erfindungsgemäß hydrierte und nicht-hydrierte Fette, z.B. Triglyceride oder Fettsäuren wie z.B. Stearin, Kokosfett oder hydrierte Öle wie z.B. hydriertes Palmöl oder hydriertes Rizinusöl.

Die Wachse können erfindungsgemäß in makrokristalliner, mikrokristalliner oder amorpher Form eingesetzt werden.

Besonders bevorzugt wird erfindungsgemäß Carnaubawachs und Montanwachs als Wachs eingesetzt. Ganz besonders bevorzugt ist Carnaubawachs.

Die erfindungsgemäß eingesetzten Insektizid-Wachs-Partikel enthalten bevorzugt außer Wachs und Insektizid(en), wie vorstehend definiert, keine weiteren Komponenten. Insbesondere enthalten sie bevorzugt keine Pheromone, keine Kohlenhydrat-Polymere, keine ölabsorbierenden Substanzen (insbesondere keine Stärke, Stärkederivate, Cellulose, amorphes Siliziumdoxid, Ton, Talk), keine anorganischen Träger, keine Verdampfungshemmer, keine Düngemittel, und kein bei Normalbedingungen flüssiges Mineralöl.

Neben den oben aufgeführten Wachs-Insektizid-Partikeln enthalten die erfindungsgemäß eingesetzten Zusammensetzungen einen oder mehrere übliche Hilfs- bzw. Zusatzstoffe aus den Gruppen der Dispergierhilfsmittel, der Trennmittel (Anti-Caking-Mittel), der Frostschutzmittel, der schaumhemmenden Mittel, der Konservierungsmittel, der Antioxidantien, der Spreitmittel, und/oder der Farbstoffe enthalten. Weiter können die erfindungemäß eingesetzten Zusammensetzungen einen Verdicker (ggf. inkl. Verdickungsaktivator), eine oder mehrere Säuren oder Basen in einer Menge, um den pH-Wert der Zusammensetzung gezielt einzustellen oder Verdicker zu aktivieren, sowie weitere Komponenten zur Optimierung der anwendungstechnischen Eigenschaften der Formulierung enthalten.

Als Verdicker kommen alle üblicherweise für diesen Zweck in agrochemischen Mitteln einsetzbaren Substanzen in Betracht, die als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien weiterhin Kaolin, Rutil, Siliciumdioxid, sogenannte hochdisperse Kieselsäure, Kieselgele, sowie natürliche und synthetische Silikate, außerdem Talkum. Als Verdicker können weiterhin synthetische Verdicker wie Polyacrylatverdicker (z.B Carbopol^{®}- und Pemulen®-Verdicker der Firma Lubrizol, Cleveland, USA), biologische Verdicker (z.B. Kelzan^{®} S, Xanthan Gum, oder weitere Hydrokolloide der Firma CP Kelco, Atlanta, USA) und anorganische Verdicker (z.B. Schichtsilikate wie Kaolin, Montmorillonit und Laoponit) eingesetzt werden. Besonders geeignet sind erfindungsgemäß biologische Verdicker wie z.B. Heteropolysaccharide, beispielsweise anionische Heteropolysaccharide wie Xanthangummi. Besonders bevorzugt ist Xanthangummi (Kelzan^{®} S).

Als Trennmittel (Anti-Caking-Mittel), die ein Verklumpen und Zusammenbacken von Zusammensetzungsbestandteilen verhindern sollen, kommen übliche Trennmittel zum Einsatz. Bevorzugt wird erfindungsgemäß pyrogene Kieselsäure (amorphes pyrogenes Siliziumdixid, z.B. Aerosil^{®}, Fa. Evonik Industries) verwendet.

Als Säuren oder Basen zur pH-Einstellung sind übliche organische und anorganische Säuren und Basen geeignet. Bevorzugt werden als Base schwache anorganische Basen wie Ammoniakwasser eingesetzt, als Säuren schwache organische Säure wie z.B. Citronensäure. Diese werden in geeigneten Mengen der Zusammensetzung zugesetzt, um den gewünschten pH einzustellen. Der pH-Wert (bei RT) der Zusammensetzung beträgt üblicherweise 3-7.

Als schaumhemmende Stoffe kommen alle für diesen Zweck in agrochemischen Mitteln einsetzbaren Substanzen in Betracht. Bevorzugt sind Silikonöle und Magnesiumstearat. Besonders geeignet im Rahmen der Erfindung ist Rhodorsil^{®} (Fa. Bluestar Siliscones), ein Polydimethylsiloxan, das in wässriger Emulsion angeboten wird.

Erfindungsgemäß werden ggf. auch Dispergierhilfsmittel verwendet. Hierfür kommen z.B. übliche Emulgatoren in Frage, insbesondere übliche Wachsemulgatoren. Hier ist insbesondere Wachsemulgator 4106^{®} zu nennen (Fa. Clariant), ein Gemisch von Alkylethoxylaten. Es handelt sich hierbei um einen nicht-ionischen Emulgator, der erfindungsgemäß bevorzugt verwendet wird.

Als Dispergierhilfsmittel können auch Tenside eingesetzt werden. Als nicht-ionische Tenside kommen neben den zuvor genannten alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon, Mischpolymerisate aus Polyvinylacetat und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, polyoxyamine Derivate und Nonylphenolethoxylate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfon-säure, Phenolsulfonsäure und Formaldehyd sowie Salze von Ligninsulfonsäure.

Bevorzugt sind nicht-ionische Tenside, ausgewählt aus der Gruppe der Polyethylenglykolether von linearen Alkoholen, Umsetzungsprodukte von Fettsäuren mit Ethylenoxid oder Propylenoxid.

Als Frostschutzmittel kommen alle üblicherweise in agrochemischen Mitteln einsetzbaren Substanzen dieses Typs in Frage. Bevorzugt sind Harnstoff, Glyzerin oder Propylenglykol. Eine weitere bevorzugte Gruppe der Frostschutzmittel sind Additive aus der Gruppe der Polyglycerine oder Polyglycerinderivate. Erfindungsgemäß kommt besonders bevorzugt 1,2-Propylenglykol zum Einsatz.

Als Konservierungsmittel kommen alle üblicherweise für diesen Zweck in agrochemischen Mitteln dieses Typs einsetzbaren Substanzen in Frage. Als Beispiele genannt seien Preventol^{®} (Gemisch von 2 Isothiazolonen, Fa. Lanxess AG) und Proxel^{®} (1,2-Benzisothiazol-3-on, Fa. Arch Chemicals, Inc.).

Als Antioxidantien kommen alle üblicherweise für diesen Zweck in agrochemischen Mitteln einsetzbaren Substanzen in Betracht. Bevorzugt ist Butylhydroxytoluol (2,6-di-t-butyl-4-methyl-phenol, BHT).

Als Spreitmittel kommen alle üblicherweise für diesen Zweck in agro-chemischen Mitteln einsetzbaren Substanzen in Betracht. Bevorzugt sind Polyether- oder organo modifizierte Polysiloxane.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Der Anteil an Wirkstoff in erfindungsgemäß verwendeten Suspensionskonzentraten kann in einem weiten Bereich variiert werden. Alle %-Angaben in dieser Beschreibung sind Gew.-%, falls nicht anders angegeben.

In erfindungegemäß verwendeten Suspensionskonzentraten, die vor der Anwendung noch mit Wasser verdünnt werden, beträgt die Menge an Wirkstoff üblicherweise 0,5 bis 5 Gew.-%, bevorzugt 0,5 bis 2,5 Gew.-%, z.B. ca. 1 Gew.-% bezogen auf das Suspensionskonzentrat.

Der Wasseranteil in Suspensionskonzentraten beträgt erfindungsgemäß ca. 65 bis 90 %, bevorzugt 70 bis 85 % bezogen auf das Suspensionskonzentrat.

Der Anteil an Wachs in den Suspensionskonzentraten beträgt erfindungsgemäß ca. 2 bis 13 %, bevorzugt ca. 3 bis 11,5 % und besonders bevorzugt 4 bis 10 % bezogen auf ds Suspensionskonzentrat.

Die Hilfs- und Zusatzstoffe machen den Rest des Suspensionskonzentrats aus.

Im allgemeinen werden die Suspensionskonzentrate zur Herstellung einer anwendungsfertigen Formulierung mit (d.h der Spritzbrühe) Wasser im Verhältnis 1:50 bis 1:500 je nach gewünschter Wirkstoffkonzentration verdünnt.

Im Fall von zum Gebrauch verdünnten Formulierungen (d.h. der Spritzbrühe) liegt der Wirkstoffanteil im Allgemeinen je nach Wirkstoff zwischen 0,00025 und 1 Gew.-%, bevorzugt zwischen 0,00125 und 0,5 Gew.-%, besonders bevorzugt zwischen 0,0025 und 0,25 Gew.-%, bezogen auf die gebrauchsfertige Gesamtzusammensetzung.

Die erfindungsgemäß verwendeten Zusammensetzungen können ferner beim Einsatz in ihren handelsüblichen Formulierungen sowie in den aus diesen Formulierungen bereiteten Anwendungsformen in Mischung mit Synergisten vorliegen. Synergisten sind Verbindungen, durch die die Wirkung der in den erfindungsgemäßen Zusammensetzungen enthaltenen Wirkstoffe gesteigert wird, ohne dass der zugesetzte Synergist selbst aktiv wirksam sein muss.

Die Anwendung geschieht in einer den Anwendungsformen angepassten üblichen Weise.

Die Herstellung erfindungsgemäß verwendeter Suspensionskonzentrate erfolgt in der Weise, dass man die Komponenten in den jeweils gewünschten Verhältnissen miteinander vermischt. Die Reihenfolge, in der die Bestandteile miteinander vermengt werden, ist beliebig, allerdings wird der Verdicker üblicherweise zuletzt zugeben. Zweckmäßigerweise setzt man die festen Komponenten, abgesehen von den erfindungsgemäß verwendeten Wirkstoff-Wachs-Partikeln, in feingemahlenem Zustand ein. Es ist aber auch möglich, die nach dem Vermengen der Bestandteile entstehende Suspension (bis auf die Wirkstoff-Wachs-Partikel, die die nachstehend genannte mittlerer Partikelgröße aufweisen) zunächst einer Grob- und dann einer Feinmahlung zu unterziehen, so dass die mittlere Teilchengröße z.B. unterhalb von 5 µm liegt. Die Temperaturen können bei der Herstellung der erfindungsgemäß verwendeten Zusammensetzung in einem bestimmten Bereich variiert werden. Geeignete Temperaturen liegen zwischen 10°C und 60°C, vorzugsweise zwischen 15°C und 40°C. Zur Herstellung der Zusammensetzung kommen übliche Misch- und Mahlgeräte in Betracht, die zur Herstellung von agrochemischen Formulierungen eingesetzt werden.

Die erfindungsgemäß verwendeten wirkstoffhaltigen Wachspartikel werden durch Sprüherstarrung gewonnen. Sie sind grobkörnig, d.h. mit einer mittleren Teilchengröße d50 von 5-40 µm, bevorzugt 10 bis 35 µm, besonders bevorzugt ca. 15µm (bestimmt nach Dispergierung in der Wasserphase durch Laserbeugung Malvern Mastersizer S). Dabei wird zunächst eine Schmelze aus dem Wachs hergestellt, das bei Raumtemperatur unter Normalbedingenungen fest ist. Dann wird der Wirkstoff in die Schmelze gleichmäßig eingearbeitet, z.B. unter Verwendung von einem Magnetrüher. Das erhaltene Gemisch wird in der vorliegenden Beschreibung als Sprühlösung bezeichnet. Diese Sprühlösung wird erfindungsgemäß aus der Vorlage in eine kontrollierte Umgebung zerstäubt, z.B. mit Hilfe einer Pumpe über eine Düse mit einem geeignet gewählten Durchmesser. Die Vorlage, die Pumpe, die Düse sowie alle Leitungen, die mit der Sprühlösung in Kontakt kommen, werden dabei auf mindestens 90 °C erwärmt. Die Sprühlösung wird mit einem Sprühgasdruck von ca. 0.8 bar in eine wesentlich kältere Umgebung, z.B. in einen Sprühturm, zerstäubt. Die Temperatur dieser Umgebung beträgt -10 bis 40°C, bevorzugt 0 bis 25 °C, besonders bevorzugt 15 bis 20°C. Durch die rasche Abkühlung beim Eintreten in den kalten Sprühturm verfestigen sich die versprühten Tröpfchen der Sprühlösung sehr rasch, und man erhält feste annähernd kugelförmige Partikel. Die Zerstäuberdüse wird so gewählt, dass die erhaltenen festen Wirkstoff-Wachs-Partikel eine Partikelgröße d50 von bevorzugt ca. 10 bis 35 µm aufweisen. Die erhaltenen Partikel werden aus dem Sprühturm auf übliche Weise entnommen, z.B. mit Hilfe eines Zyklons. In den Partikeln liegt der Wirkstoff gleichmäßig verteilt vor. Ein weiterer Gegenstand der vorliegenden Erfindung ist demnach ein Verfahren zur Herstellung der erfindungsgemäß verwendeten Wirkstoff-Wachs-Partikel durch die oben beschriebene Sprüherstarrung.

Wenn die erhaltenen Wirkstoff-Wachs-Partikel anschließend in eine wässerige Suspension eingearbeitet werden, diffundiert der Wirkstoff aus dem Inneren der Partikel zur Oberfläche (Grenzfläche Träger/Wasser) und kristallisiert dort aus. Man erhält dann Partikel, die auf ihrer Oberfläche im Mikroskop Abbildung 1: (Rasterelektronenmikroskop ESEM Quanta 400 der Fa. FEI Company Deutschland GmbH)deutlich erkennbare Kristalle aufweisen. Es findet also beim Einbringen der Partikel in Wasser eine Phasenumwandlung von molekuar dispers bzw. amorph zu kristallin und ein Auswandern der Wirkstoffs aus dem Partikelinneren und eine Wirkstoffanreicherung an der Oberfläche statt. Es wird angenommen, dass diese spezielle Struktur der erfindungsgemäß verwendeten Partikel für die verbesserte Wirkung ursächlich ist. Dies ist der Fall, wenn die Konzentration an Wirkstoff, bevorzugt an Deltamethrin im Wachs zwischen 20 und 30 Gew.-% liegt.

Die erfindungsgemäß verwendeten Wirkstoffe eignen sich bei guter Pflanzenverträglichkeit, günstiger Warmblütertoxizität und guter Umweltverträglichkeit zur Bekämpfung von Schaben und Ameisen, die in der Landwirtschaft, im Gartenbau, bei der Tierzucht, in Forsten, in Gärten und Freizeiteinrichtungen, im Vorrats- und Materialschutz sowie auf dem Hygienesektor vorkommen. Sie sind gegen normal sensible und resistente Arten sowie gegen alle oder einzelne Entwicklungsstadien wirksam.

Eine weitere Ausführungsform der Erfindung betrifft die Verwendung einer insektiziden Zusammensetzung die durch die in dieser Anmeldung angegebenen Herstellungsmethode herstellbar (bevorzugt hergestellt) ist.

Die erfindungsgemäß verwendeten Formulierungen können zur Abtötung von Schaben und Ameisen verwendet werden.

Ganz besonders bevorzugt werden die erfindungsgemäß verwendeten Materialien gegen Schaben und Ameisen eingesetzt.

Liegen die erfindungsgemäß verwendbaren Zusammensetzungen in nicht gebrauchsfertiger Form vor (z.B. als wässriges Suspensionskonzentrat), werden sie für ihren bestimmungsgemäßen Gebrauch zunächst in Wasser verdünnt. Es wird dabei so weit verdünnt, dass der Wirkstoffgehalt bei der beabsichtigen Auftragsmenge eine ausreichende insektizide Wirkung sichert. Die Verdünnung ergibt dabei Zusammensetzungen, die den oben spezifizierten anwendungsfertigen Zusammensetzungen entsprechen. Die verdünnte Sprühlösung (in der Anmeldung auch als Spritzbrühe bezeichnet) kann auf jede übliche Art versprüht werden, z.B. durch handbetriebene oder elektrische Sprüher.

Eine besonders bevorzugte Ausführungsform der Erfindung betrifft desweitern die erfindungsgemäße Verwendung einer Spritzbrühe umfassend eine erfindungsgemäße insektizide Zusammensetzung, wobei der insektizide Wirkstoff der insektiziden Zusammensetzung zumindest einer der folgenden insektiziden Wirkstoffe ist:
- Deltamethrin, wobei Deltamethrin in einer Konzentration von 10 bis 240 mg pro Liter Spritzbrühe vorzugsweise von 20 bis 125 mg pro Liter Spritzbrühe vorliegt, oder
- Beta-Cyfluthrin, wobei Beta-Cyfluthrin in einer Konzentration von 20 bis 125 mg pro Liter Spritzbrühe vorliegt, oder
- Cyfluthrin, wobei Cyfluthrin in einer Konzentration von 100 bis 300 mg pro Liter Spritzbrühe vorliegt, oder
- Lambda-Cyhalothrin, wobei Lambda-Cyhalothrin in einer Konzentration von 20 bis 125 mg pro Liter Spritzbrühe vorliegt, oder
- Bendiocarb, wobei Bendiocarb in einer Konzentration von 1000 bis 2000 mg pro Liter Spritzbrühe vorliegt, oder
- Nat Pyrethrum, wobei Nat Pyrethrum in einer Konzentration von 200 bis 1000 mg pro Liter Spritbrühe vorliegt, oder
- Fipronil, wobei Fipronil in einer Konzentration von 20 bis 200 mg pro Liter Spritzbrühe vorliegt.

Ein weiterer Gegenstand der Erfindung betrifft die Verwendung einer erfindungsgemäß verwendbaren insektiziden Zusammensetzung zur Herstellung der erfindungsgemäßen Spritzbrühe.

Ein weiterer Gegenstand der Erfindung bezieht sich auf die Verwendung einer erfindungsgemäßen insektiziden Zusammensetzung, bzw. eines erfindungsgemäßen Wirkstoff Wachs-Partikels oder einer erfindungsgemäßen Spritzbrühe zur Schädlingsbekämpfung und insbesondere zur Befreiung von Oberflächen von Schädlingsbefall und/oder zum Schutz von Oberflächen vor Schädlingsbefall.

Ein Wirkstoff wird dabei im Allgemeinen in einer Flächen-Konzentration von 0,05 bis 1000 mg/m² ausgebracht, bevorzugt in einer Konzentration von 0,05 bis 500 mg/m², besonders bevorzugt in einer Konzentration von 0,1 bis 250 mg/m² und ganz besonders bevorzugt in einer Konzentration von 1 bis 200 mg/m².

Deltamethrin wird bevorzugt (als Bestandteil der erfindungsgemäß verwendbaren insektiziden Zusammensetzung, der Wirkstoff-Wachs-Partikel oder der Spritzbrühe) in einer Flächen-Konzentration von 0,5 mg/m² bis 12 mg/m² und besonders bevorzugt von 1 mg/m² bis 6,25 mg/m² ausgebracht.

Beta-Cyfluthrin wird bevorzugt (als Bestandteil der erfindungsgemäß verwendbaren insektiziden Zusammensetzung, der Wirkstoff-Wachs-Partikel oder der Spritzbrühe) in einer Flächen-Konzentration von 1 mg/m² bis 6,25 mm ausgebracht.

Cyfluthrin wird bevorzugt (als Bestandteil der erfindungsgemäß verwendbaren insektiziden Zusammensetzung, der Wirkstoff-Wachs-Partikel oder der Spritzbrühe) in einer einer Flächen-Konzentration von 5 mg/m² bis 12,5 mm ausgebracht.

Lambda-Cyhalothrin wird bevorzugt (als Bestandteil der erfindungsgemäß verwendbaren insektiziden Zusammensetzung, der Wirkstoff-Wachs-Partikel oder der Spritzbrühe) in einer Flächen-Konzentration von 1 mg/m² bis 6,25 mm ausgebracht.

Bendiocarb wird bevorzugt (als Bestandteil der erfindungsgemäß verwendbaren insektiziden Zusammensetzung, der Wirkstoff-Wachs-Partikel oder der Spritzbrühe) in einer Flächen-Konzentration von 50 mg/m² bis 100 mg/m² ausgebracht.

Nat Pyrethrum wird bevorzugt (als Bestandteil der erfindungsgemäß verwendbaren insektiziden Zusammensetzung, der Wirkstoff-Wachs-Partikel oder der Spritzbrühe) in einer Flächen-Konzentration von 10 mg/m² bis 50 mg/m² ausgebracht.

Fipronil wird bevorzugt (als Bestandteil der erfindungsgemäß verwendbaren insektiziden Zusammensetzung, der Wirkstoff-Wachs-Partikel oder der Spritzbrühe) in einer Flächen-Konzentration von 1 mg/m² bis 10 mg/m² ausgebracht.

Bevorzugt werden die erfindungsgemäß verwendbare Zusammensetzungen in solcher Verdünnung und Aufwandmenge auf eine Oberfläche appliziert, dass ein Flächenauftrag der Wirkstoff-Wachs-Partikel (bezogen auf Feststoff) von 0,25 mg/m² bis 5000 mg/m², bevorzugt von 0,25 mg/m² bis 2500 mg/m², besonders bevorzugt von 0,5 mg/m² bis 1250 mg/m² und besonders bevorzugt von 5 mg/m² bis 1000 mg/m² vorliegt.

Ein weiterer Gegenstand der Erfindung betrifft eine Methode zur Befreiung von Oberflächen von Schädlingsbefall und/oder zum Schutz von Oberflächen vor Schädlingsbefall durch Behandlung einer Oberfläche mit einer erfindungsgemäß verwendbaren insektiziden Zusammensetzung umfassend ein Wirkstoff-Wachs-Partikel, wobei der Wirkstoff des Wirkstoff-Wachs-Partikels zumindest einer der folgenden insektiziden Wirkstoffe enthält:
- Deltamethrin und Deltamethrin als Bestandteil der insektiziden Zusammensetzung in einer Flächen-Konzentration von 0,5 mg/m² bis 12 mg/m² auf die Oberfläche appliziert wird, oder
- Beta-Cyfluthrin und Beta-Cyfluthrin als Bestandteil der insektiziden Zusammensetzung in einer Flächen-Konzentration von 1 mg/m² bis 6,25 mm auf die Oberfläche appliziert wird, oder
- Cyfluthrin und Cyfluthrin als Bestandteil der insektiziden Zusammensetzung in einer Flächen-Konzentration von 5 mg/m² bis 12,5 mg/m² auf die Oberfläche appliziert wird, oder
- Lambda-Cyhalothrin und Lambda-Cyhalothrin als Bestandteil der insektiziden Zusammensetzung in einer Flächen-Konzentration von 1 mg/m² bis 6,25 mg/m² auf die Oberfläche appliziert wird, oder
- Bendiocarb und Bendiocarb als Bestandteil der insektiziden Zusammensetzung in einer Flächen-Konzentration von 50 mg/m² bis 100 mg/m² auf die Oberfläche appliziert wird, oder
- Nat Pyrethrum und Nat Pyrethrum als Bestandteil der insektiziden Zusammensetzung in einer Flächen-Konzentration von 10 mg/m² bis 50 mg/m² auf die Oberfläche appliziert wird, oder
- Fipronil und Fipronil als Bestandteil der insektiziden Zusammensetzung in einer Flächen Konzentration von 1 mg/m² bis 10 mg/m² auf die Oberfläche appliziert wird.

Die erfindungsgemäß verwendbaren Zusammensetzungen können auf beliebige Oberfläche innerhalb von Gebäuden oder im Freien angewendet werden, z.B. Tapete, Beton, Zement, Kacheln, Fliesen, Putz, Mauerstein, Holz (behandelt und unbehandelt), Keramik (lasiert und unlasiert), Stroh bzw. Reet, Ziegel (roh, gekalkt, gestrichen), Tonmineralien (z.B. Terrakotta), kreidehaltige, kalkhaltige, gipshaltige, zementhaltige und lehmhaltige Oberflächen oder auch auf Pflanzen wie Rasen.

Die folgenden Beispiele dienen zur Verdeutlichung der Erfindung und sind in keiner Weise beschränkend auszulegen.

### Anwendunssbeispiele

### a) Herstellung von Deltamethrin-Wachs-Partikeln (erfindungsgemäß)

400 g Carnaubawachs T4 fettgrau werden geschmolzen. Dann wird durch Rühren 100 g Deltamethrin gleichmäßig mit einem Magnetrüher in der erhaltenen Schmelze dispergiert. Das erhaltene flüssige Gemisch (Sprühlösung) wird aus der Vorlage mit Hilfe einer Pumpe über eine Zweistoffdüse (Öffnungsdurchmesser 1,5 / 0,7 mm) in einen Sprühturm versprüht. Die Temperatur von Vorlage, Pumpe und Düse beträgt dabei ca. 90°C, die Temperatur im Sprühturm ca. -10 bis 40 °C. Die nach dem Erstarren erhaltenen Partikel werden mit einem Zyklon ausgetragen.

### b) Herstellung einer Suspensionskonzentrats (erfindungsgemäß)

258 g 1,2-Propylenglykol, 516 g Wachsemulgator 4106 (Alkoxyethoxylat-Gemisch CAS-No. [68920-66-1], Clariant International AG, Muttenz, Schweiz) MX 25% (129g Wachsemulgator 4106 in demineralisiertem Wasser), 21,5 g Aerosil^{®} 200 (synthetisches, amorphes Siliciumdioxid, Evonik Degussa GmbH, DE), 8,6g g Proxel^{®} GXL 20% (1,2-Benzisothiazolin-3-one in Dipropylene glycol (CAS 2634-33-5), Arch UK Biocides Ltd.), 8,6g g Citronensäure (wasserfrei), 4,3 g Rhodorsil^{®} 426 R (20-30%ige wässrige Emulsion von Polydimethyllsiloxan, Bluestar Silicones, FR), 3,44 g Preventol^{®} D7 (flüssige Formulierung von ca. 1,5 % Isothiazolonen, Lanxess AG, DE) und 2404,56 g demineralsiertem Wasser werden in einem Kessel unter Rühren zu einer Vorlösung homogenisiert. Anschließend werden 215 g deltamethrinhaltigen Wachspartikel (43g Deltamethrin in Carnaubawachs T 4 fettgrau) unter Homogenisation mittels Silverson Homogenisator (Typ L4RT) bei 5000 upm in die Vorlösung gegeben und weitere 5 min bei 7700 upm homogenisert. Abschließend werden 860 g Kelzan^{®} S (Xanthan gum, CAS 011138-66-2, F.B.Silbermann GmbH & Co KG, DE) MX 2% (17,2g Kelzan^{®} S, 0,86 g 24-30%iger Ammoniaklösung, 1,29 g Proxel^{®} GXL 20%, 0,688 g Preventol^{®} D7 in demineralisiertem Wasser) unter Rühren mittels Zahnscheibenrührer zugegeben und 30 min nachgerührt.

### c) Ausbringung des verdünnten Suspensionskonzentrates und Wirksamkeit dieses Residualbelages gegen Schadinsekten

Das in Beispiel b) hergestellte Suspensionskonzentrat (10g Deltamethrin/l) wird mit einer berechneten Menge Wasser verdünnt und so durch Sprühen auf einer Holzoberfläche ausgebracht, dass die angegebene Menge von Deltamethrin dieser Oberfläche vorhanden ist. Zum Beispiel ergibt eine 1:250 Verdünnung des erfindungsgemäß verwendbaren Konzentrats und Ausbringen von 50 ml Spritzbrühe pro m² eine Konzentration auf der Oberfläche von 2 mg Deltmethrin/m². Nach dem Abtrocknen (24 h) werden Ameisen der Gattung Camponotus spp. auf der Oberfläche exponiert. Nach 30 min werden diese in ein sauberes unbehandeltes Gefäß überführt. Die Ameisen werden zu den angegebenen Zeitabständen untersucht, und der Abtötungsgrad (Mortalität) ermittelt. Überraschenderweise zeigte die erfindungsgemäß verwendete Formulierung einen a) schnelleren Knock down Wert und b) wesentlich bessere Abtötungsgrade bei geringer Dosierung. Die Verbesserung des Knock-down Wertes und Wirkung bei geringen Konzentrationen ist durch die verbesserter Bioverfügbarkeit begründet.

**Tabelle 1: Wirksamkeit als Residualbelag auf Holz**

| | **Konzentration in mg Deltamethrin/ m²** | **Knock down nach 30'** | **Knock down nach 60'** | **Knock down nach 4h** | **Mortalität nach 1d** |
|---|---|---|---|---|---|
| Suspend^{®} SC (50g Deltamethrin/l, Bayer CropScience AG, DE) | 12,5 | 37 | 82 | 75 | 40 |
| Suspend^{®} SC | 6,25 | 45 | 97 | 85 | 70 |
| Suspend ^{®}SC) | 4 | 22 | 85 | 67 | 25 |
| Suspend ^{®}SC | 2 | 17 | 70 | 57 | 17 |
| | | | | | |
| Erfindungsg. verwendete SC (10g Deltamethrin/l) | 12,5 | 77 | 100 | 100 | 100 |
| Erfindungsg. verwendete SC | 6,25 | 75 | 100 | 100 | 100 |
| Erfindungsg. verwendete SC | 4 | 55 | 95 | 82 | 85 |
| Erfindungsg. verwendete SC | 2 | 27 | 82 | 85 | 55 |

### d) Ausbringung des verdünnten Suspensionskonzentrates und Wirksamkeit dieses Residualbelages gegen Schadinsekten

In einem weiteren Beispiel wird das in Beispiel b) hergestellte Suspensionskonzentrat wird mit Wasser 1:125 verdünnt, so dass eine Spritzbrühe erhalten wird, in der Deltamethrin in einer Konzentration von 80 mg pro Liter Spritzbrühe vorliegt und danach die Spritzbrühe durch Sprühen von 50 ml pro m² auf einer Betonoberfläche ausgebracht wird, so dass 4 mg/m² Deltamethrin auf dieser Oberfläche vorhanden ist. Nach dem Abtrocknen (24 h) werden Deutsche Schaben (Blattella germanica) auf der Oberfläche exponiert. Nach 30 min werden diese in ein sauberes unbehandeltes Gefäß überführt. Die Schaben werden zu den angegebenen Zeitabständen untersucht, und der Abtötungsgrad ermittelt. Überraschenderweise zeigte die erfindungsgemäß verwendete Formulierung wieder einen a) schnelleren Knock down Wert und b) wesentlich bessere Abtötungsgrade bei dieser geringer Dosierung.

Desweiteren wird c) eine bessere Residualwirkung erzielt da nach 60 Wochen noch 100% Abtötung bei Verwendung der erfindungsmäßigen Erfindung erzielt wird. Die Standard Formulierung erzielt nach 2 Wochen letztmalig die volle Abtötungsrate von 100%.

**Tabelle 2: Wirksamkeit als Residualbelag auf Beton**

| | | **Alter der Oberfläche (d = Tage, w = Wochen)** | **Knockdown nach 1h** | **Mortalität nach 1d** |
|---|---|---|---|---|
| Crackdown^{®} SC (10g Deltamethrin/l, Bayer Crop Science AG, DE) | 4 mg/m² | 1d | 100 | 100 |
| Crackdown^{®} SC | 4 mg/m² | 2w | 30 | 100 |
| Crackdown^{®} SC | 4 mg/m² | 16w | 10 | 90 |
| Crackdown^{®} SC | 4 mg/m² | 20w | 0 | 80 |
| Crackdown^{®} SC | 4 mg/m² | 40w | 0 | 0 |
| Crackdown^{®} SC | 4 mg/m² | 60w | 0 | 0 |
| | | | | |
| Erfindungsg. verwendete SC (10g Deltamethrin/l) | 4 mg/m² | 1d | 100 | 100 |
| Erfindungsgemäßes verwendete SC | 4 mg/m² | 2w | 100 | 100 |
| Erfindungsgemäßes verwendete SC | 4 mg/m² | 16w | 100 | 100 |
| Erfindungsgemäßes verwendete SC | 4 mg/m² | 20w | 40 | 100 |
| Erfindungsgemäßes verwendete SC | 4 mg/m² | 40w | 60 | 100 |
| Erfindungsgemäßes verwendete SC | 4 mg/m² | 60w | 10 | 100 |

### e) Verwendung anderer Wirkstoffe

Beispiel e) verdeutlicht, daß auch andere Wirkstoffe erfolgreich im Rahmen dieser Erfindung (als verdünnte Suspensionskonzentration d.h. als erfindungsgemäße Spritzbrühe) eingesetzt werden können. Neben Deltamethrin können sowohl Bendiocarb als auch Betacyfluthrin und Cyfluthrin verkapselt werden. Die Tabelle 3a zeigt Knock down nach 1 h und Abtötungsgrad nach 24h (jeweils in %) von Blattella germancica nach einer 30 minütigen Exposition auf verschiedenen Oberflächen, welche mit den angegebenen Wirkstoffen in der angebenen Standard- Konzentration behandelt wurden. Tabelle 3b zeigt Knock down nach 1h und Abtötungsgrad nach 24 h (jedes Mal angegeben in %) von Blattella germanica 30 Minuten nach Behandlung von Oberflächen mit den angegebenen insektiziden Wirkstoffen bei reduzierter Wirkstoffkonzentration.

**Tabelle 3a: Wirksamkeit verschiedener Insektizide bei der Standard-Konzentration**

| | **Bendiocarb 100 mg/m²** | | | **Deltamethrin 12.5 mg/m²** | | | **Beta Cyfluthrin 12.5 mg/m²** | | |
|---|---|---|---|---|---|---|---|---|---|
| | Holz | Zement | Kachel | Holz | Zement | Kachel | Holz | Zement | Kachel |
| **Knock down nach 1h** | 60 | 100 | 100 | 100 | 100 | 100 | 100 | 100 | 100 |
| **Mortalität nach 24h** | 100 | 100 | 100 | 100 | 100 | 100 | 100 | 100 | 100 |
| | | | | | | | | | |

| | **Cyfluthrin 25 mg/m²** | | | | | | | | |
|---|---|---|---|---|---|---|---|---|---|
| | Holz | Zement | Kachel | | | | | | |
| **Knock down nach 1h** | 100 | 100 | 100 | | | | | | |
| **Mortalität nach 24h** | 100 | 100 | 100 | | | | | | |

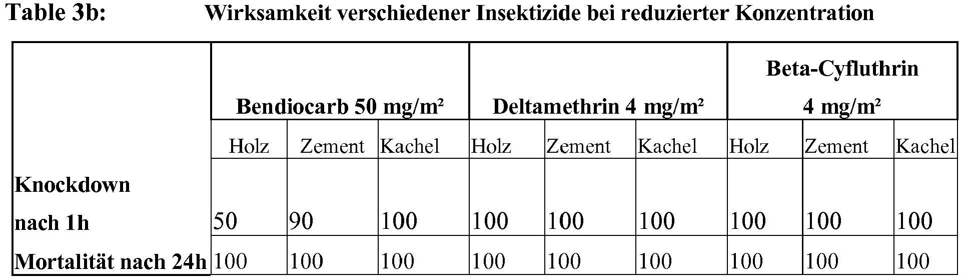

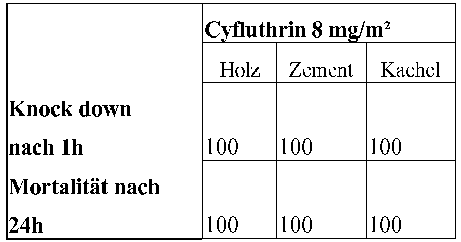

### f) Eignung für unterschiedlichste Schadinsekten

Beispiel f) verdeutlicht, daß auch andere Schadinsekten erfolgreich im Rahmen dieser Erfindung bekämpft werden können. Die Tabelle 4 zeigt den Abtötungsgrad nach 24 h nach einer nur 5 minütigen Exposition auf einer Holzoberfläche, welche mit den angegebenen Formulierungen in der angebenen Konzentration behandelt wurden.

**Tabelle 4: Wirksamkeit gegen verschiedene Schadinsekten**

| | **Konz. in mg DLT/m²** | ***Camponotus spp*** | ***Solenopsis xyloni*** | ***Blattella germanica*** | ***Tribolium confusum*** | ***Musca domestica*** |
|---|---|---|---|---|---|---|
| Suspend^{®} SC (50g Deltamethrin/l, Bayer CropScience AG, DE) | 12,5 | 40 | 18 | 100 | 52 | 100 |
| Suspend^{®} SC | 6,25 | 70 | 15 | 100 | 70 | 100 |
| Suspend^{®} SC | 4 | 25 | 18 | 100 | 96 | 100 |
| Suspend^{®} SC | 2 | 18 | 28 | 100 | 4 | 100 |
| | | | | | | |
| Erfindungsg. verwendete SC (10g Deltamethrin/l) | 12,5 | 100 | 100 | 100 | 70 | 100 |
| Erfindungsg. verwendete SC | 6,25 | 100 | 98 | 100 | 56 | 100 |
| Erfindungsg. verwendete SC | 4 | 85 | 90 | 100 | 81 | 100 |
| Erfindungsg. verwendete SC | 2 | 55 | 88 | 100 | 33 | 100 |

## Patentansprüche

1. Verwendung einer insektiziden Zusammensetzung enthaltend
- mindestens einen insektiziden Wirkstoff, ausgewählt aus Deltamethrin, Beta-Cyfluthrin, Cyfluthrin, Lambda-Cyhalothrin, Bendiocarb, natürliches Pyrethrum und Fipronil,
- Wachs mit einem Schmelzpunkt von 50 bis 160 °C bei Normalbedingungen,
- Wasser und
- übliche Zusatzstoffe und/oder Hilfsstoffe,
**dadurch gekennzeichnet, dass**
der/die insektizide(n) Wirkstoff(e) im Wachs dispergiert ist/sind und das insektizidhaltige Wachs
in der Zusammensetzung in Form von Partikeln vorliegt, wobei die Partikel eine Partikelgröße von 5 bis 40 µm aufweisen, und Kristalle des/der Wirkstoffs(e) an der Oberfläche der Partikel vorhanden sind
zur Befreiung von Oberflächen von Schädlingsbefall und/oder zum Schutz von Oberflächen vor Schädlingsbefall, wobei die Schädlinge Schaben oder Ameisen sind.

2. Verwendung einer insektiziden Zusammensetzung nach Anspruch 1, **dadurch gekennzeichnet, dass** das Wachs ein Carnaubawachs oder Montanwachs ist.

3. Verwendung einer insektiziden Zusammensetzung nach einem der vorherigen Ansprüche, **dadurch gekennzeichnet, dass** die Zusammensetzungen nicht-ionische Tenside, ausgewählt aus der Gruppe der Polyethylenglykolether von linearen Alkoholen, Umsetzungsprodukte von Fettsäuren mit Ethylenoxid oder Propylenoxid enthalten.

4. Verwendung einer insektiziden Zusammensetzung nach Anspruch 1 bis 3, wobei der Anteil (in Gew.-% bezogen auf die Zusammensetzung) an insektizidem/n Wirkstoff(en) 0,5 % bis 5%, an Wachs 2 % bis 13% und an Wasser 65% bis 90% beträgt und der Rest übliche Hilfs- und Zusatzstoffe ist.

5. Verwendung einer insektiziden Zusammensetzung nach einem der vorstehenden Ansprüche, wobei die insektizidhaltigen Wachspartikel erhältlich sind durch Schmelzen von Wachs, Dispergieren des Wirkstoffs in der Schmelze, und Versprühen und Abkühlen (Sprüherstarrung) des erhaltenen Gemisches.

6. Verwendung von Wirkstoff-Wachs-Partikel, in denen mindestens ein insektizider Wirkstoff ausgewählt aus Deltamethrin, Beta-Cyfluthrin, Cyfluthrin, Lambda-Cyhalothrin, Bendiocarb, Natürliches Pyrethrum und Fipronil in mindestens einem Wachs dispergiert ist, welches bei Normalbedingungen einen Schmelzpunkt von 50 bis 160 °C aufweist, wobei die Partikel eine Partikelgröße von 5 bis 40 µm aufweisen, und nach Dispergierung der Wirkstoff-Wachs-Partikel in wässriger Lösung Kristalle des/der insektizide(n) Wirkstoffs(e) an der Oberfläche der Partikel vorhanden sind
zur Befreiung von Oberflächen von Schädlingsbefall und/oder zum Schutz von Oberflächen vor Schädlingsbefall, wobei die Schädlinge Schaben oder Ameisen sind.

7. Verwendung einer Spritzbrühe umfassend eine insektizide Zusammensetzung nach einem der Ansprüche 1 bis 5,
zur Befreiung von Oberflächen von Schädlingsbefall und/oder zum Schutz von Oberflächen vor Schädlingsbefall, wobei die Schädlinge Schaben oder Ameisen sind und
wobei der insektizide Wirkstoff der insektiziden Zusammensetzung zumindest einer der folgenden insektiziden Wirkstoffe ist:
Deltamethrin, wobei Deltamethrin in einer Konzentration von 10 bis 240 mg pro Liter Spritzbrühe vorliegt, oder
Beta-Cyfluthrin, wobei Beta-Cyfluthrin in einer Konzentration von 20 bis 125 mg pro Liter Spritzbrühe vorliegt, oder
Cyfluthrin, wobei Cyfluthrin in einer Konzentration von 100 bis 300 mg pro Liter Spritzbrühe vorliegt, oder
Lambda-Cyhalothrin, wobei Lambda-Cyhalothrin in einer Konzentration von 20 bis 125 mg pro Liter Spritzbrühe vorliegt, oder
Bendiocarb, wobei Bendiocarb in einer Konzentration von 1000 bis 2000 mg pro Liter Spritzbrühe vorliegt, oder
Nat Pyrethrum, wobei Nat Pyrethrum in einer Konzentration von 200 bis 1000 mg pro Liter Spritzbrühe vorliegt, oder
Fipronil, wobei Fipronil in einer Konzentration von 20 bis 200 mg pro Liter Spritzbrühe vorliegt.

8. Verwendung einer Spritzbrühe umfassend eine insektizide Zusammensetzung mit einem Wirkstoff-Wachs -Partikel nach Anspruch 6,
zur Befreiung von Oberflächen von Schädlingsbefall und/oder zum Schutz von Oberflächen vor Schädlingsbefall, wobei die Schädlinge Schaben oder Ameisen sind und wobei der Wirkstoff des Wirkstoff-Wachs-Partikels zumindest einen der folgenden insektiziden Wirkstoffe enthält:
Deltamethrin, wobei Deltamethrin in einer Konzentration von 10 bis 240 mg pro Liter Spritzbrühe vorliegt, oder
Beta-Cyfluthrin, wobei Beta-Cyfluthrin in einer Konzentration von 20 bis 125 mg pro Liter Spritzbrühe vorliegt, oder
Cyfluthrin, wobei Cyfluthrin in einer Konzentration von 100 bis 300 mg pro Liter Spritzbrühe vorliegt, oder
Lambda-Cyhalothrin, wobei Lambda-Cyhalothrin in einer Konzentration von 20 bis 125 mg pro Liter Spritzbrühe vorliegt, oder
Bendiocarb, wobei Bendiocarb in einer Konzentration von 1000 bis 2000 mg pro Liter Spritzbrühe vorliegt, oder
Nat Pyrethrum, wobei Nat Pyrethrum in einer Konzentration von 200 bis 1000 mg pro Liter Spritzbrühe vorliegt, oder
Fipronil, wobei Fipronil in einer Konzentration von 20 bis 200 mg pro Liter Spritzbrühe vorliegt.

9. Verwendung einer insektiziden Zusammensetzung nach einem der Ansprüche 1 bis 5, eines Wirkstoff-Wachs-Partikels nach Anspruch 6 oder einer Spritzbrühe gemäß Anspruch 7 oder 8, wobei der insektizide Wirkstoff zumindest einer der folgenden insektiziden Wirkstoffe ist:
Deltamethrin und Deltamethrin bei dieser Verwendung in einer Flächen-Konzentration von 0,5 mg/m² bis 12 mg/m² ausgebracht wird, oder
Beta-Cyfluthrin und Beta-Cyfluthrin bei dieser Verwendung in einer Flächen-Konzentration von 1 mg/m² bis 6,25 mg/m² ausgebracht wird, oder
Cyfluthrin und Cyfluthrin bei dieser Verwendung in einer einer Flächen-Konzentration von 5 mg/m² bis 12,5 mg/m² ausgebracht wird, oder
Lambda-Cyhalothrin und Lambda-Cyhalothrin bei dieser Verwendung in einer Flächen-Konzentration von 1 mg/m² bis 6,25 mg/m² ausgebracht wird, oder
Bendiocarb und Bendiocarb bei dieser Verwendung in einer Flächen-Konzentration von 50 mg/m² bis 100 mm ausgebracht wird, oder
Nat Pyrethrum und Nat Pyrethrum bei dieser Verwendung in einer Flächen-Konzentration von 10 mg/m² bis 50 mg/m² ausgebracht wird, oder
Fipronil und Fipronil bei dieser Verwendung in einer Flächen-Konzentration von 1 mg/m² bis 10 mm ausgebracht wird.

## Claims

1. Use of an insecticidal composition comprising
- at least one active insecticidal ingredient selected from deltamethrin, betacyfluthrin, cyfluthrin, lambda-cyhalothrin, bendiocarb, natural pyrethrum and fipronil,
- wax having a melting point of 50 to 160°C under standard conditions,
- water and
- customary additives and/or auxiliaries,
**characterized in that**
the active insecticidal ingredient or ingredients is or are dispersed in the wax, and the insecticide-containing wax is present in the composition in the form of particles, the particles having a particle size of 5 to 40 µm, and crystals of the active ingredient or ingredients being present at the surface of the particles for freeing surfaces from pest infestation and/or for protecting surfaces from pest infestation the pests being cockroaches or ants.

2. Use of an insecticidal composition according to Claim 1, **characterized in that** the wax is a carnauba wax or montan wax.

3. Use of an insecticidal composition according to any of the preceding claims, **characterized in that** the compositions comprise nonionic surfactants selected from the group of the polyethylene glycol ethers of linear alcohols, reaction products of fatty acids with ethylene oxide or propylene oxide.

4. Use of an insecticidal composition according to Claims 1 to 3, where the fraction (in % by weight, based on the composition) of active insecticidal ingredient or ingredients is 0.5% to 5%, that of wax is 2% to 13% and that of water is 65% to 90% and the remainder is customary auxiliaries and additives.

5. Use of an insecticidal composition according to any of the preceding claims, where the insecticide-containing wax particles are obtainable by melting wax, dispersing the active ingredient in the melt, and spraying and cooling (spray solidifying) the resultant mixture.

6. Use of active ingredient-wax particles, in which at least one active insecticidal ingredient selected from deltamethrin, beta-cyfluthrin, cyfluthrin, lambda-cyhalothrin, bendiocarb, natural pyrethrum and fipronil is dispersed in at least one wax which under standard conditions has a melting point of 50 to 160°C, the particles having a particle size of 5 to 40 µm, and, after dispersion of the active ingredient-wax particles in an aqueous solution, crystals of the active insecticidal ingredient or ingredients being present at the surface of the particles for freeing surfaces from pest infestation and/or for protecting surfaces from pest infestation the pests being cockroaches or ants.

7. Use of a spraying liquor comprising an insecticidal composition according to any of Claims 1 to 5 for freeing surfaces from pest infestation and/or for protecting surfaces from pest infestation the pests being cockroaches or ants, the active insecticidal ingredient in the insecticidal composition being at least one of the following active insecticidal ingredients:
deltamethrin, with deltamethrin being present in a concentration of 10 to 240 mg per litre of spraying liquor, or
beta-cyfluthrin, with beta-cyfluthrin being present in a concentration of 20 to 125 mg per litre of spraying liquor, or
cyfluthrin, with cyfluthrin being present in a concentration of 100 to 300 mg per litre of spraying liquor, or
lambda-cyhalothrin, with lambda-cyhalothrin being present in a concentration of 20 to 125 mg per litre of spraying liquor, or
bendiocarb, with bendiocarb being present in a concentration of 1000 to 2000 mg per litre of spraying liquor, or
nat pyrethrum, with nat pyrethrum being present in a concentration of 200 to 1000 mg per litre of spraying liquor, or
fipronil, with fipronil being present in a concentration of 20 to 200 mg per litre of spraying liquor.

8. Use of a spraying liquor comprising an insecticidal composition with an active ingredient-wax particle according to Claim 6 for freeing surfaces from pest infestation and/or for protecting surfaces from pest infestation the pests being cockroaches or ants, the active ingredient in the active ingredient-wax particle containing at least one of the following active insecticidal ingredients:
deltamethrin, with deltamethrin being present in a concentration of 10 to 240 mg per litre of spraying liquor, or
beta-cyfluthrin, with beta-cyfluthrin being present in a concentration of 20 to 125 mg per litre of spraying liquor, or
cyfluthrin, with cyfluthrin being present in a concentration of 100 to 300 mg per litre of spraying liquor, or
lambda-cyhalothrin, with lambda-cyhalothrin being present in a concentration of 20 to 125 mg per litre of spraying liquor, or
bendiocarb, with bendiocarb being present in a concentration of 1000 to 2000 mg per litre of spraying liquor, or
nat pyrethrum, with nat pyrethrum being present in a concentration of 200 to 1000 mg per litre of spraying liquor, or
fipronil, with fipronil being present in a concentration of 20 to 200 mg per litre of spraying liquor.

9. Use of an insecticidal composition according to any of Claims 1 to 5, of an active ingredient-wax particle according to Claim 6 or of a spraying liquor according to Claim 7 or 8, the active insecticidal ingredient being at least one of the following active insecticidal ingredients:
deltamethrin, and deltamethrin in this use is applied in an areal concentration of 0.5 mg/m² to 12 mg/m², or
beta-cyfluthrin, and beta-cyfluthrin in this use is applied in an areal concentration of 1 mg/m² to 6.25 mg/m², or
cyfluthrin, and cyfluthrin in this use is applied in an areal concentration of 5 mg/m² to 12.5 mg/m², or
lambda-cyhalothrin, and lambda-cyhalothrin in this use is applied in an areal concentration of 1 mg/m² to 6.25 mg/m², or
bendiocarb, and bendiocarb in this use is applied in an areal concentration of 50 mg/m² to 100 mg/m², or
nat pyrethrum, and nat pyrethrum in this use is applied in an areal concentration of 10 mg/m² to 50 mg/m², or
fipronil, and fipronil in this use is applied in an areal concentration of 1 mg/m² to 10 mg/m².

## Revendications

1. Utilisation d'une composition insecticide contenant
- au moins une substance active insecticide, choisie parmi la deltaméthrine, la bêta-cyfluthrine, la cyfluthrine, la lambda-cyhalothrine, le bendiocarbe, le pyrèthre naturel et le fipronil,
- une cire ayant un point de fusion de 50 à 160 °C dans les conditions normales,
- de l'eau et
- des additifs et/ou adjuvants,
**caractérisée en ce que**
la/les substance(s) active(s) insecticide(s) est/sont dispersée (s) dans la cire et la cire contenant l'insecticide/les insecticides est présente dans la composition sous forme de particules, les particules présentant une taille de particule de 5 à 40 µm, et des cristaux de la/des substance(s) active(s) étant présents à la surface des particules
pour la libération de surfaces d'avec une attaque par des nuisibles et/ou pour la protection de surfaces contre une attaque par des nuisibles, les nuisibles étant des cafards ou des fourmis.

2. Utilisation d'une composition insecticide selon la revendication 1, **caractérisée en ce que** la cire est la cire de carnauba ou la cire de lignite.

3. Utilisation d'une composition insecticide selon l'une quelconque des revendications précédentes, **caractérisée en ce que** les compositions contiennent des tensioactifs non ioniques, choisis dans le groupe des éthers de polyéthylèneglycol avec des alcools linéaires, des produits de réaction d'acides gras aves l'oxyde d'éthylène ou l'oxyde de propylène.

4. Utilisation d'une composition insecticide selon l'une quelconque des revendications 1 à 3, dans laquelle la proportion (en % en poids par rapport à la composition) de substance(s) active(s) insecticide(s) vaut de 0,5 % à 5 %, de cire vaut de 2 % à 13 % et d'eau vaut de 65 % à 90 %, et le reste consiste en des adjuvants et additifs usuels.

5. Utilisation d'une composition insecticide selon l'une quelconque des revendications précédentes, dans laquelle les particules de cire contenant l'insecticide sont obtenues par fusion de cire, dispersion de la substance active dans la masse fondue, et pulvérisation et refroidissement (solidification par pulvérisation) du mélange obtenu.

6. Utilisation de particules de cire-substance(s) active(s), dans lesquelles au moins une substance active insecticide choisie parmi la deltaméthrine, la bêta-cyfluthrine, la cyfluthrine, la lambdacyhalothrine, le bendiocarbe, le pyrèthre naturel et le fipronil est dispersée dans au moins une cire qui présente dans les conditions normales un point de fusion de 50 à 160 °C, les particules présentant une taille de particule de 5 à 40 µm, et, après dispersion des particules de cire-substance(s) active(s) en solution aqueuse, des cristaux de la/des substance(s) active(s) insecticide(s) sont présents à la surface des particules
pour la libération de surfaces d'avec une attaque par des nuisibles et/ou pour la protection de surfaces contre une attaque par des nuisibles, les nuisibles étant des cafards ou des fourmis.

7. Utilisation d'une bouillie à pulvériser comprenant une composition insecticide selon l'une quelconque des revendications 1 à 5,
pour la libération de surfaces d'avec une attaque par des nuisibles et/ou pour la protection de surfaces contre une attaque par des nuisibles, les nuisibles étant des cafards ou des fourmis et
la substance active insecticide de la composition insecticide étant au moins l'une des substances actives insecticides suivantes :
deltaméthrine, la deltaméthrine étant présente à une concentration de 10 à 240 mg par litre de bouillie à pulvériser, ou
bêta-cyfluthrine, la bêta-cyfluthrine étant présente à une concentration de 20 à 125 mg par litre de bouillie à pulvériser, ou
cyfluthrine, la cyfluthrine étant présente à une concentration de 100 à 300 mg par litre de bouillie à pulvériser, ou
lambda-cyhalothrine, la lambda-cyhalothrine étant présente à une concentration de 20 à 125 mg par litre de bouillie à pulvériser, ou
bendiocarbe, le bendiocarbe étant présent à une concentration de 1 000 à 2 000 mg par litre de bouillie à pulvériser, ou
pyrèthre naturel, le pyrèthre naturel étant présent à une concentration de 200 à 1 000 mg par litre de bouillie à pulvériser, ou
fipronil, le fipronil étant présent à une concentration de 20 à 200 mg par litre de bouillie à pulvériser.

8. Utilisation d'une bouillie à pulvériser comprenant une composition insecticide comportant une particule de cire-substance active selon la revendication 6,
pour la libération de surfaces d'avec une attaque par des nuisibles et/ou pour la protection de surfaces contre une attaque par des nuisibles, les nuisibles étant des cafards ou des fourmis et
la substance active de la particule de cire-substance active comportant au moins l'une des substances actives insecticides suivantes :
deltaméthrine, la deltaméthrine étant présente à une concentration de 10 à 240 mg par litre de bouillie à pulvériser, ou
bêta-cyfluthrine, la bêta-cyfluthrine étant présente à une concentration de 20 à 125 mg par litre de bouillie à pulvériser, ou
cyfluthrine, la cyfluthrine étant présente à une concentration de 100 à 300 mg par litre de bouillie à pulvériser, ou
lambda-cyhalothrine, la lambda-cyhalothrine étant présente à une concentration de 20 à 125 mg par litre de bouillie à pulvériser, ou
bendiocarbe, le bendiocarbe étant présent à une concentration de 1 000 à 2 000 mg par litre de bouillie à pulvériser, ou
pyrèthre naturel, le pyrèthre naturel étant présent à une concentration de 200 à 1 000 mg par litre de bouillie à pulvériser, ou
fipronil, le fipronil étant présent à une concentration de 20 à 200 mg par litre de bouillie à pulvériser.

9. Utilisation d'une composition insecticide selon l'une quelconque des revendications 1 à 5, d'une particule de cire-substance active selon la revendication 6 ou d'une bouillie à pulvériser selon la revendication 7 ou 8, la substance active insecticide étant au moins l'une des substances actives insecticides suivantes :
deltaméthrine et la deltaméthrine dans cette utilisation étant appliquée à une concentration par unité de surface de 0,5 mg/m² à 12 mg/m², ou
bêta-cyfluthrine et la bêta-cyfluthrine dans cette utilisation étant appliquée à une concentration par unité de surface de 1 mg/m² à 6,25 mg/m², ou
cyfluthrine et la cyfluthrine dans cette utilisation étant appliquée à une concentration par unité de surface de 5 mg/m² à 12,5 mg/m², ou
lambda-cyhalothrine et la lambda-cyhalothrine dans cette utilisation étant appliquée à une concentration par unité de surface de 1 mg/m² à 6,25 mg/m², ou
bendiocarbe et le bendiocarbe dans cette utilisation étant appliqué à une concentration par unité de surface de 50 mg/m² à 100 mg/m², ou
pyrèthre naturel et le pyrèthre naturel dans cette utilisation étant appliqué à une concentration par unité de surface de 10 mg/m² à 50 mg/m², ou
fipronil et le fipronil dans cette utilisation étant appliqué à une concentration par unité de surface de 1 mg/m² à 10 mg/m².
